# EUROPEAN PATENT APPLICATION

(11) **EP 2 551 006 A1**
(43) Date of publication of application: **30.01.2013**
(21) Application number: 11187211.5
(22) Date of filing: 30.10.2011
(51) Int. Cl.: B01D 53/04, B01D 53/56

(54) **Process for removing contaminants from gas streams**

(30) Priority: 25.07.2011 CN 201110265507
(71) Applicant: Linde Aktiengesellschaft, 80331 München (DE)
(72) Inventor: Zhu, Jian-jun, 201206 Shanghai (CN); Suchak, Naresh, Glen Rock, NJ New Jersey 07452 (US)
(74) Representative: Hofmann, Andreas

(57) **Abstract**

In order to provide a process for removing contaminants, particularly nitrogen oxides, from a gas stream, said process being effective even when the concentration of the contaminants, particularly of the nitrogen oxides, in the gas stream treated is low, a method is proposed, said method comprising the steps of:
a) feeding ozone into said gas stream;
b) feeding said gas stream containing ozone to an adsorption unit (10, 20);
c) separating contaminants from said gas stream in said adsorption unit (10, 20); and
d) recovering a purified gas stream from said adsorption unit (10, 20).

## Description

### Technical field of the present invention

The present invention provides for processes for removing contaminants from gas stream emissions. More particularly, the present invention provides for removing contaminants such as nitrogen oxides in low concentrations from gas streams.

### Background of the present invention; prior art

In certain industries such as pharmaceutical and agricultural chemical processes, low nitrogen oxides (NOₓ) concentrations are necessary. When air is used as an oxidant in these types of processes, even a trace amount of nitrogen oxides in the air can be accumulated and converted to nitrogen-containing chemical compounds such as nitrites and nitrates. Due to strict regulations in final products, nitrites and nitrates are undesirable and necessarily need to be removed or their formation inhibited in the first instance.

Normal air is characterized in that it has a low nitrogen oxides concentration of about 0.1 ppm or less at ambient temperatures. The concentration of nitrogen oxides varies greatly in quantity according to where the air sample is retrieved from.

Recent federal and local environmental laws require very significant reduction of discharge of harmful gaseous substances into the atmosphere. Chief among such harmful air pollutants are nitrogen oxides (NOₓ). In response to strict enforcement efforts of these laws, industrial air polluters have made considerable efforts to reduce the amount of these harmful substances into the air in gaseous effluents from industrial or municipal sources.

Successful efforts to reduce the concentration of NOₓ in gaseous effluents often involve reacting the NOₓ in waste gases with nitrogen-based reducing agents. Other methods include selective catalytic reduction (SCR), wet absorption and dry adsorption which are normally used to efficiently remove nitrogen oxides with high concentrations in emission gases.

Another known method of removing NOₓ from gas streams involves contacting the NOₓ with ozone, thereby oxidizing them to higher nitrogen oxides, such as dinitrogen pentoxide (N₂0₅), and removing the higher oxides from the gas stream by means of aqueous scrubbers.

Specific details of ozone-based NOₓ oxidation processes are disclosed in prior art documents US 5 206 002, US 5 316 737, US 5 985 223, and US 6 197 268, the respective disclosures of which are incorporated herein by reference.

However, these processes are not necessarily as effective when the concentrations of nitrogen oxides in the gas stream treated are low.

### Disclosure of the present invention: object, solution, advantages

Starting from the disadvantages and shortcomings as described above and taking the prior art as discussed into account, an object of the present invention is to provide a process for removing contaminants, particularly nitrogen oxides, from a gaseous stream, said process being effective even when the concentration of the contaminants, particularly of the nitrogen oxides, in the gas stream treated is low.

This object is accomplished by a method comprising the features of claim 1. Advantageous embodiments and expedient improvements of the present invention are disclosed in the dependent claims.

The present invention basically uses a method for removing contaminants, particularly nitrogen oxides, from a gaseous stream by blending ozone into the gaseous stream and feeding the blended ozone and gaseous stream to an adsorption unit. The reaction products of ozone and the nitrogen oxides will be adsorbed and a purified gas stream recovered from the adsorption unit.

More particularly, the present invention is a method for removing contaminants, particularly nitrogen oxides, from a gaseous stream containing these contaminants in low concentrations. For purposes of the present invention, these concentrations are in a level of ppm, particularly less than two ppm.

The method comprises the steps of:
a) feeding ozone into the gas stream;
b) feeding the gas stream containing ozone to an adsorption unit;
c) separating contaminants from the gas stream in the adsorption unit; and
d) recovering a purified gas stream from the adsorption unit.

According to an advantageous embodiment of the present invention, the gas stream is selected from the group consisting of air, oxygen, and oxygen-enriched air.

According to an expedient embodiment of the present invention, the concentration of ozone added to the gas stream is between zero percent to ten percent by volume, and the amount of ozone is between one to twenty times the amount of NOₓ present.

According to a favoured embodiment of the present invention, the contaminants are nitrogen oxides.

According to a preferred embodiment of the present invention, the nitrogen oxides are selected from the group consisting of nitrogen oxide, nitrogen dioxide and dinitrogen pentoxide (N₂O₅).

According to an advantageous embodiment of the present invention, the adsorption unit contains an adsorbent capable of adsorbing nitrogen oxides.

According to an expedient embodiment of the present invention, the ozone is blended with the gas stream in a tube blender.

According to a favoured embodiment of the present invention, the adsorption unit is mounted upstream of a compressor.

According to a preferred embodiment of the present invention, two adsorption units are present.

According to an advantageous embodiment of the present invention, a first adsorption unit is adsorbing the contaminants while a second adsorption unit is being regenerated.

According to an expedient embodiment of the present invention, the regeneration is performed with heated regeneration air or nitrogen.

According to a favoured embodiment of the present invention, nitrogen oxides desorbed from the second adsorption unit are fed to an aqueous scrubber.

According to a preferred embodiment of the present invention, the contaminant is present in a concentration less than 2.0 ppm.

According to an advantageous embodiment of the present invention, the adsorption unit further converts excess ozone into oxygen.

According to an expedient embodiment of the present invention, the adsorption unit contains more than one bed.

The gas stream is selected from the group consisting of air, oxygen, and oxygen-enriched air. Another small quantity gas stream containing ozone in the concentration ranging from zero percent to ten percent by volume is blended with the main gas stream in a tube blender. The contaminants treated for by the methods of the present invention are nitrogen oxides and these nitrogen oxides are selected from the group consisting of nitrogen oxide, nitrogen dioxide and dinitrogen pentoxide (N₂O₅).

The adsorption unit is mounted upstream of the compressor unit which compresses the purified gas stream before it is fed to storage or other usage inside an industrial facility. The adsorption unit will contain an adsorbent which is capable of adsorbing nitrogen oxides such as manganese dioxide but also activated carbon and particular zeolites. Adsorbents such as manganese dioxide and carbon not only adsorb NOx but also convert excess ozone into oxygen.

An adsorption unit may have more than one bed with more than one adsorbent. A single adsorption unit may be employed but two or multiples of two are preferred such that one adsorption unit or bank of adsorption units can be adsorbing the nitrogen oxide contaminants while the other adsorption unit or bank of adsorption units is being regenerated.

The desorbed nitrogen oxides from the second adsorption unit or bank of adsorption units can be vented directly to the atmosphere or they can be fed to an aqueous scrubber where the nitrogen oxides are scrubbed out of the regeneration gas stream. This regeneration gas stream is typically air or nitrogen and can be heated to assist in its ability to regenerate the adsorbent material.

The adsorption units not only provide separation of contaminants from the gas stream also eliminates excess ozone in the gas stream by converting into oxygen.

The purified gas stream now free of nitrogen oxides can be recovered and can be employed in industrial processes such as chemical and fine chemical production processes.

The present invention provides a method for removing nitrogen oxides from air and other gas streams resulting in a gas stream that can be employed as an oxidant in final chemical production processes.

Accordingly, the present invention finally relates to the use of the method as described above in at least one chemical production process, particularly in a final chemical production process.

### Brief description of the drawings

For a more complete understanding of the present inventive embodiments and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of nonlimiting example and to the appended drawing figures taken in conjunction with the description of the embodiments, of which:
- Fig. 1: is a schematic of a nitrogen oxides removal process according to the present invention; and
- Fig. 2: is a similar schematic as Fig. 1 showing a nitrogen oxides removal process according to the present invention with the regeneration gas sources in a different location.

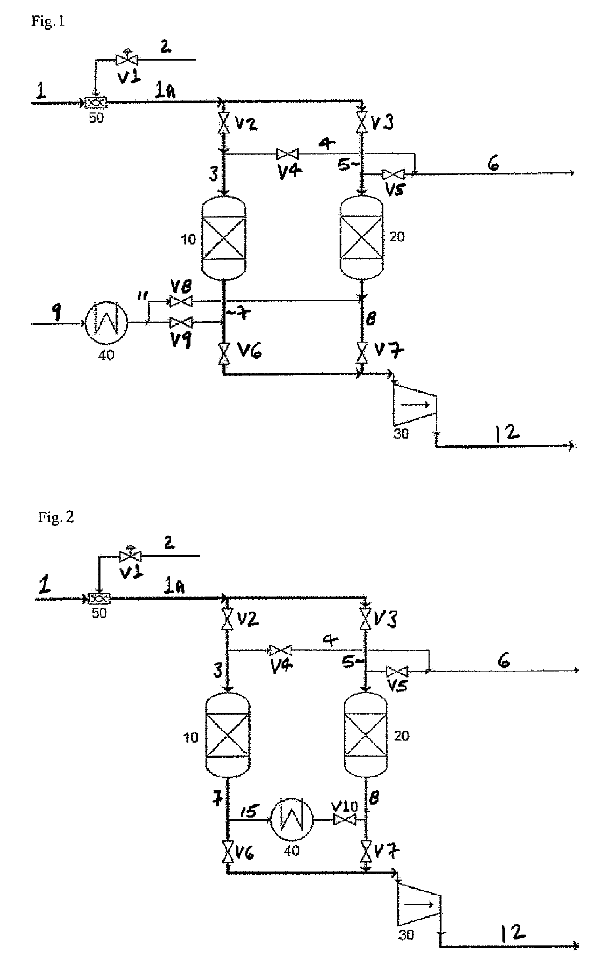

In the appended drawing figures, like equipment is labelled with the same reference numerals throughout the description of Fig. 1 and of Fig. 2.

### Detailed description of the drawings; best way of embodying the present invention

In order to avoid unnecessary repetitions, the following description regarding the embodiments, characteristics and advantages of the present invention relates - unless otherwise stated - to all respective embodiments of the method or process according to the present invention.

Turning to Fig. 1, a schematic of a nitrogen oxides removal process is shown. Air is fed through line 1 to a tube blender 50. Ozone, particularly ozone containing steam, is fed through line 2 and valve V1 to the tube blender 50 where it can mix with the air. This mixture can be air and ozone or alternatively if oxygen only is fed through line 1, then a mixture of oxygen and ozone.

The amount of ozone added to the air or oxygen depends upon the amount of nitrogen oxides present in the air or oxygen. Typically this amount is between one to twenty times the amounts of NOx present in the gas stream. Concentration of ozone in the gas stream is between zero percent to ten percent by volume. This mixture of air is fed from the tube blender 50 through line 1A to the absorption beds 10 and 20.

In this embodiment, there are shown two adsorption beds; however, one adsorption bed may be sufficient as well as banks of two or more adsorption beds. When valve V2 is open and valve V3 is closed, the air and ozone stream mixture is fed through line 3 to adsorber 10. In this step impurities are absorbed from the air stream in adsorber 10 and an air stream free of impurities exits through line 7 and open valve V6 to compressor 30 where it will exit as purified air through line 12.

The impurities that are removed are primarily nitrogen dioxide and dinitrogen pentoxide (N₂0₅) which are both products of the reaction of ozone with a major nitrogen oxides compound nitrogen oxide. These compounds are readily adsorbed by absorbents such as manganese dioxide in the adsorption bed. Typical adsorbents for use in adsorbing nitrogen oxide impurities include activated carbon and zeolites.

In the first part of the adsorption cycle, the adsorption bed is adsorber 10 and the bed undergoing regeneration is adsorber 20. In this step, purified air or nitrogen N₂ is fed through line 9 to a heater 40. Valve V9 is closed and valve V8 is open so the purified air or nitrogen is directed through line 11 to line 8.

Valve V7 will be closed and the air or nitrogen will enter adsorber 20 where the air or nitrogen will regenerate the adsorbent material present therein. This regeneration gas will exit through line 5 and be directed through valve V5 to line 6 where the regeneration gas will be vented to the atmosphere or fed to an aqueous scrubber, not shown.

In the second half of the adsorption cycle, the air and ozone mixture is directed in line 1A past closed valve V2 into open valve V3. The mixture is directed through line 5 into the second adsorber unit 20 where the impurities present in the air and ozone mixture will be adsorbed by an appropriate adsorbent present in adsorber 20. The now purified air will leave adsorber 20 through line 8 and pass through open valve V7 into compressor 30 where it will exit as purified air through line 12.

In the second step of the adsorption process, adsorber 20 will be the adsorption bed and adsorber 10 will act as the regeneration bed. In this step, valve V5 and valve V8 are closed and purified air or nitrogen is fed through line 9 to heater 40 and open valve V9 into line 7 where it will enter adsorber 10.

The purified air or nitrogen will regenerate the adsorbent material which contains impurities and will exit adsorber 10 through line 3, valve V2 being closed and enter line 4 through open valve V4 where it will join with line 6 and be vented to the atmosphere or fed to an aqueous scrubber, not shown.

In an alternative arrangement of a process for the present invention, Fig. 2 shows a different location for the heater. All other designations are the same as in Fig. 1 and the adsorption cycle follows the same steps except as to the generation of the gas used as the regeneration gas. In this alternative arrangement, the heater 40 is placed in a duct joining line 7 and line 8 extending from adsorber 10 and adsorber 20 respectively.

When air is flowing from adsorber 10, part of the purified air is diverted through line 15 and open valve V10 and passes through the heater 40 where it will enter line 8 and be fed into adsorber 20 for regeneration of the adsorbent material contained therein. In the other half of the adsorption cycle, purified air exiting adsorber 20 through line 8 is fed through open valve V10 to heater 40 and from line 15 to line 7 where it will enter the adsorber 10 and act as a regeneration gas for the adsorbent contained therein.

While this invention has been described with respect to particular embodiments thereof, it is apparent that numerous other forms and modifications of the present invention will be obvious to those skilled in the art. The appended claims in this invention generally should be construed to cover all such obvious forms and modifications which are within the true spirit and scope of the present invention.

### List of reference numerals

- 1: line, particularly first line
- 1A: line, particularly second line
- 2: line, particularly third line
- 3: line, particularly fourth line
- 4: line, particularly fifth line
- 5: line, particularly sixth line
- 6: line, particularly seventh line
- 7: line, particularly eighth line
- 8: line, particularly ninth line
- 9: line, particularly tenth line
- 10: adsorber, particularly first adsorber, or adsorber unit, particularly first adsorber unit, or adsorption unit, particularly first adsorption unit, or adsorption bed, particularly first adsorption bed
- 11: line, particularly eleventh line
- 12: line, particularly twelfth line
- 15: line, particularly thirteenth line
- 20: second adsorber or second adsorber unit or second adsorption unit or second adsorption bed
- 30: compressor
- 40: heater
- 50: tube blender
- V1: valve, particularly first valve
- V2: valve, particularly second valve
- V3: valve, particularly third valve
- V4: valve, particularly fourth valve
- V5: valve, particularly fifth valve
- V6: valve, particularly sixth valve
- V7: valve, particularly seventh valve
- V8: valve, particularly eighth valve
- V9: valve, particularly ninth valve
- V10: valve, particularly tenth valve

## Claims

1. A method for removing contaminants from a gas stream comprising the steps of:
a) feeding ozone into said gas stream;
b) feeding said gas stream containing ozone to an adsorption unit (10, 20);
c) separating contaminants from said gas stream in said adsorption unit (10, 20); and
d) recovering a purified gas stream from said adsorption unit (10, 20).

2. The method according to claim 1 wherein said gas stream is selected from the group consisting of air, oxygen, and oxygen-enriched air.

3. The method according to claim 1 or 2 wherein the concentration of ozone added to said gas stream is between zero percent to ten percent by volume, and the amount of ozone is between one to twenty times the amount of NOₓ present.

4. The method according to at least one of claims 1 to 3 wherein said contaminants are nitrogen oxides.

5. The method according to claim 4 wherein said nitrogen oxides are selected from the group consisting of nitrogen oxide, nitrogen dioxide and dinitrogen pentoxide (N₂0₅).

6. The method according to at least one of claims 1 to 5 wherein said adsorption unit (10, 20) contains an adsorbent capable of adsorbing nitrogen oxides.

7. The method according to at least one of claims 1 to 6 wherein said ozone is blended with said gas stream in a tube blender (50).

8. The method according to at least one of claims 1 to 7 wherein said adsorption unit (10, 20) is mounted upstream of a compressor (30).

9. The method according to at least one of claims 1 to 8 wherein two adsorption units (10, 20) are present.

10. The method according to claim 9
- wherein a first adsorption unit (10) is adsorbing said contaminants
- while a second adsorption unit (20) is being regenerated, particularly with heated regeneration air or nitrogen.

11. The method according to claim 9 or 10 wherein nitrogen oxides desorbed from said second adsorption unit (20) are fed to an aqueous scrubber.

12. The method according to at least one of claims 1 to 11 wherein said contaminant is present in a concentration less than 2.0 ppm.

13. The method according to at least one of claims 1 to 12 wherein said adsorption unit (10, 20) further converts excess ozone into oxygen.

14. The method according to at least one of claims 1 to 13 wherein said adsorption unit (10, 20) contains more than one bed.

15. Use of the method according to at least one of claims 1 to 14 in at least one chemical production process, particularly in a final chemical production process.
